# EUROPEAN PATENT APPLICATION

(11) **EP 4 026 624 A1**
(43) Date of publication of application: **13.07.2022**
(21) Application number: 22150610.8
(22) Date of filing: 07.01.2022
(51) Int. Cl.: B07B 1/02, B07B 1/04, B07B 1/46

(54) **IMPROVED METHOD OF HANDLING WOOD FUEL PELLETS**

(30) Priority: 07.01.2021 US 202117143680
(71) Applicant: W.C. Bradley Co., Columbus, GA 31901 (US)
(72) Inventor: KUMAR, Gunjit, Newman, 30263 (US); WARD, Thomas, Cataula, 31804 (US); CORSO, Dan, Columbus, 8400 (US); STERRITT, Ryan, Opelika, 36804 (US); WAYLAND, Scott, Columbus, 31909 (US)
(74) Representative: Script IP Limited

(57) **Abstract**

A filter insert is sized to fit into a fuel pellet handling bucket and has a filter floor elevated by a plurality of standoffs to define a space below the screen mesh fuel insert.

## Description

### FIELD OF THE INVENTION

This disclosure relates to fuel handling operations in general and, more specifically, to fuel handling operations for pellet fueled cooking devices.

### BACKGROUND OF THE INVENTION

Compressed wood fuel pellets are used in a variety of applications including heating and cooking. For either mobile or stationery applications it may be desirable to handle pellets in buckets instead of directly from a bag. One issue that arises in handling wood pellets is that the mechanical action of pellets on each other in the act of moving them tends to grind small particles of wood dust off the surface of the pellets. This fine dust has a strong affinity to combine with water vapor in the air or stray droplets of water and create a glue like paste that severely impedes the movement of the pellets through the auger systems typically used to transport them and, can cause component failure or downtime due to necessary repairs.

What is needed is a system and method for addressing the above and related concerns.

### SUMMARY OF THE INVENTION

The invention of the present disclosure, in one aspect thereof, comprises a fuel pellet handling system including a filter insert sized to fit into a fuel pellet handling bucket. The filter insert comprises a filter floor elevated by a plurality of standoffs to define a space below the screen mesh fuel insert. The filter floor defines openings allowing dust to pass therethrough but retaining fuel pellets.

In some embodiments, the filter floor comprises a screen mesh. The filter insert may further comprise an upright wall extending from the filter floor. The upright wall may comprise a screen mesh. The upright wall may comprise four screen mesh panels arranged in a rectilinear configuration extending upwardly from the filter floor.

The filter insert may include a pair of handles joined to the upright wall. Each of the pair of handles may be joined to a different one of the four screen mesh panels.

In some embodiments, a lower frame is situated at a perimeter of the floor and joined to the plurality of standoffs. An upper frame may be situated an upper perimeter of the four upright planar screen mesh walls and joining the pair of handles to the upright wall.

In invention of the present disclosure, in another aspect thereof, comprises a fuel pellet handling system having a screen mesh floor, four upright screen wall panels arranged in a slab sided configuration and joined to the floor to define an interior volume for storing fuel pellets, and a plurality of standoffs elevated the screen mesh floor to define a space below the screen mesh floor. The screen mesh floor and the screen wall panels retain fuel pellets in the interior volume while allowing particles below a predetermined size to pass through.

Some embodiments further comprise a lower frame having a frame rail at a junction of each of the four upright screen wall panels and the screen mesh floor. The plurality of standoffs may be affixed to the lower frame.

Some embodiments further comprise an upper frame joined to the four upright screen walls panels at an opposite end thereof from the screen mesh floor, the upper frame providing a plurality of handles extending upwardly therefrom. The upper frame may comprise four frame rails, with one of each of the frame rail joined to one of the four upright screen walls.

In some embodiments, each of the plurality of handles joins to a single frame rail of the upper frame. In other embodiments, each of the plurality of handles joins to two of the frame rails of the upper frame.

The invention of the present disclosure, in another aspect thereof, comprises a fuel pellet handling system including a fuel pellet bucket having an interior volume of a first contour, an open top, and a floor, and a screen mesh insert sized to fit within the interior volume and having a second contour corresponding to the first contour. The mesh screen insert has a mesh screen floor elevated above the pellet bucket floor by at least one standoff such that a void is defined between the mesh screen floor and the bucket floor.

The mesh screen insert may have at least one handle affixed on a top thereof. The handle of the mesh screen insert may be rotatable between an extended position and a lowered position. The handle may span an opening into the screen mesh insert. In some cases, a lid fits onto the pellet fuel bucket.

### BRIEF DESCRIPTION OF THE DRAWINGS

Figure 1 is a perspective view of one embodiment of a filter insert for a pellet handling system according to aspects of the present disclosure.
Figure 2 is an exploded perspective view of a pellet handling system according to aspects of the present disclosure.
Figure 3 is a perspective view of another embodiment of a filter insert for a pellet handling system according to aspects of the present disclosure.
Figure 4 is a perspective view of another embodiment of a filter insert for a pellet handling system according to aspects of the present disclosure.
Figure 5 is an exploded perspective view of another embodiment of a filter insert for a pellet handling system according to aspects of the present disclosure.

### DETAILED DESCRIPTION OF THE PREFERRED EMBODIMENTS

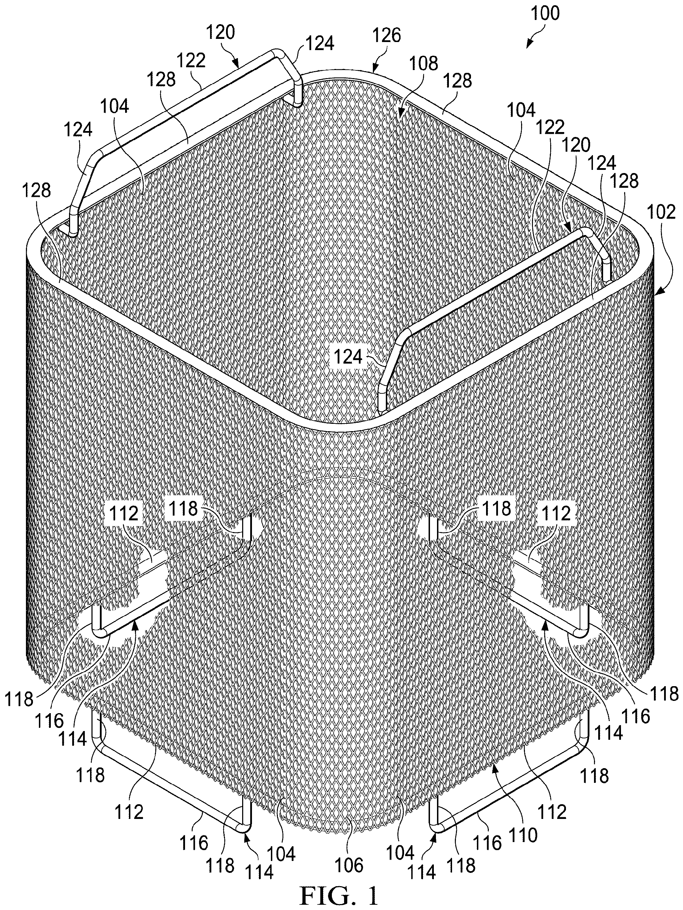

Referring now to Figure 1, a perspective view of one embodiment of a filter insert 100 for a pellet handling system according to aspects of the present disclosure is shown. In various embodiments, the present disclosure provides a screen wire basket as a filter insert 100 that acts as an inner liner for a bucket used for transporting fuel pellets. The insert 100 may be generally rectilinear in appearance and shape, or may have other shapes that conform to the bucket or container in which it is utilized.

In the illustrated embodiment of Figure 1, the insert **100** comprises a wall **102** comprising four panels **104.** The panels **104** may be generally planar but may be rounded or radiused where they join together. In some embodiments, the panels **104** and the wall **102** may be a continuous piece of material with no seams. In other embodiments, one or more of the panels **104** may be formed separately and joined together. The wall **102** may comprise a wire screen material or a planar material than is bent to the appropriate shape and perforated (before or after bending).

The wall **102** may be constructed such that openings therein allow dust and other fine material to pass through while retaining all or a majority of the useable fuel pellets. In various embodiments, openings or apertures in the wall **102** may range from .5 mm up 5 mm. In other embodiments, openings or apertures may range from large enough to effectively pass dust particles but small enough to prevent passage of most or all intact fuel pellets.

A floor **106** may be provided for the insert **100** near a bottom end thereof. The floor **106** and wall **102** define an interior volume **108** in which fuel pellets are received, transported, etc., but which will allow dust and other fine materials to pass or fall through. To that end, the floor **106** may comprise a wire screen, mesh, or perforated material similar to the wall **102.** The floor may be a planar component affixed to a lower portion of the wall **102.**

In some embodiments, the floor **106** may be formed as a separate component from the wall **102** and then attached thereto. A lower frame **110** may bound the floor **106** and or the lower wall **102.** The lower frame **110** may interconnect the wall **102** and the floor **106** and may provide structural rigidity. In the present embodiment, the floor **106** is generally square, though it may have radiused corners to match the panels **104** of the wall **102.** The lower frame **110** may comprise a number of rails **112** joined together with each rail **110** aligning with a conjunction of a wall panel **104** and one side of the floor **106.** The joints of adjacent frame rails **112** may be radiused to match the wall panels **104** and/or floor **106.** The lower frame **110** may comprise a wire or metallic material. It may affix to the wall **102** and/or floor **106** via welding, use of an adhesive, or other mechanisms.

Rather than resting directly on a container floor, the insert **100** may provide one or more standoffs **114** projecting downwardly from the wall panels **104,** floor **106,** or, as illustrated, from the rails **112** of the frame **110.** The standoffs **114** may comprise a lower rail or foot **116** suspended by spaced apart legs **118.** In other embodiments other structures or configurations may be utilized that allow the floor **106** to be elevated above a container floor into which the insert **100** is placed.

The insert **100** may also provide handles, such as illustrated handles **120,** that allow the insert to be moved or inserted and removed from the pellet container. A top portion of the wall **102** may be affixed to a top frame **126.** The top frame **126** may have four rails **128** joined in a square configuration (possibly radiused at the corners). One rail **128** may be situated atop each of the four wall panels **104.** The top frame may provide mounting locations for the handles **120.**

The handles **120** may comprise a grip **122** suspended over the frame rail **128** by a pair of spaced apart arms **124.** The arms **124** may angle inward toward the grip **122** in some embodiments. As shown, there are two handles **120** located on two opposite frame rails **128.** Four or more handles **120** may be provided but two are sufficient for stable lifting and movement of the insert **100.**

The insert **100** may also be said to have a contour conforming to an interior of the bucket **200** such that the interior volume **108** of the insert **100** is nearly the same as the interior volume **209** of the bucket **202.** In some embodiments, the loss of interior volume **108** of the insert **100** relative to the interior volume **209** of the bucket **202** is due only to the necessity of the wall **102** of the insert **100** to fit within the walls **204** of the bucket **202** and due to the wall **102** of the insert **100** being somewhat shorter than the walls **204** of the bucket **202** due to the standoffs **114** and/or handles **120** of the insert **100.**

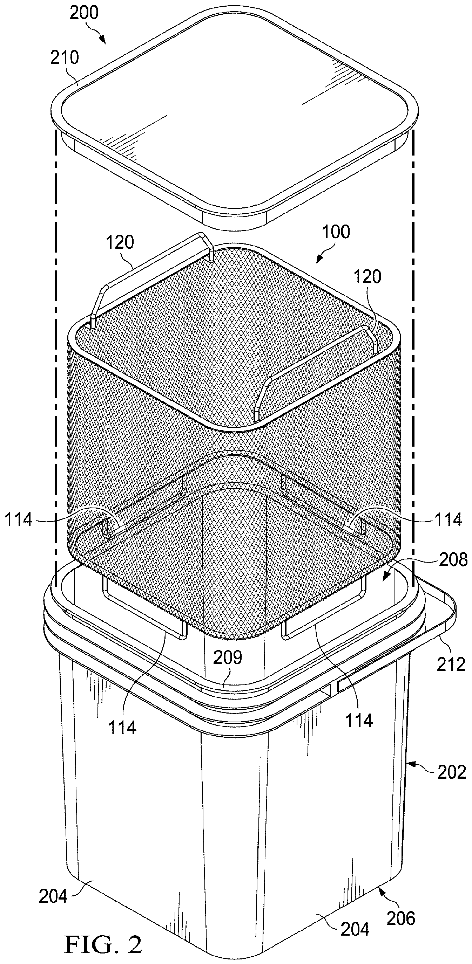

Referring now to Figure 2, an exploded perspective view of a pellet handling system **200** according to aspects of the present disclosure is shown. Figure 2 illustrates one possible application of the insert **100** described above. The insert **100** may comprise a screen wire basket is somewhat smaller in dimension from a transport bucket **202** with which it may be used to transport and handle pellet fuel. The screen wire is sized to retain normal commercial pellets but allow dust to pass. As noted above, perforated sheets or other arrangements may be used to retain pellets but pass dust.

The insert **100** may be placed into the bucket **202** and rest on a floor **206** thereof. The bucket **202** may comprise a square or rectilinear shape with four walls **204** ascending from the floor. In some embodiments the bucket **212** may have a handle for transport or other uses. A tight-fitting lid **210** may also be provided. The lid **210** may fit tightly onto or seal onto an upper lip **209** of the bucket **202** with the insert (possibly containing fuel pellets) covered in an interior **208** of the bucket **202.** The bucket **202** may have other features making it compatible with particular pellet hoppers and other fuel handling equipment.

The standoffs **114** define a space between the floor **206** of the transport bucket **202** and the floor **106** of the insert **100.** In use, the transport bucket **202** with the insert **100** inside can be placed below the hopper of a pellet grill and catch fuel pellets as they are drained from the hoper. With the tight-fitting lid **210** the entire system **200** pellets can be stored until the next use event. At that point the insert **100** may be removed from the transport bucket **202** and the fuel pellets poured into the hopper. Dust or contaminants in the fuel pellets will tend to collect below the insert floor **106** and can be discarded.

The bucket **202** may be a vertically extended configuration of any closed cross section (such as an oval, rectangle, or triangle or any generalized closed section). The insert **100** may have a shape that conforms to the internal dimensions of the bucket **202** in that it fits inside the bucket **202** possibly mirroring the shape for maximum capacity for the bucket **202.**

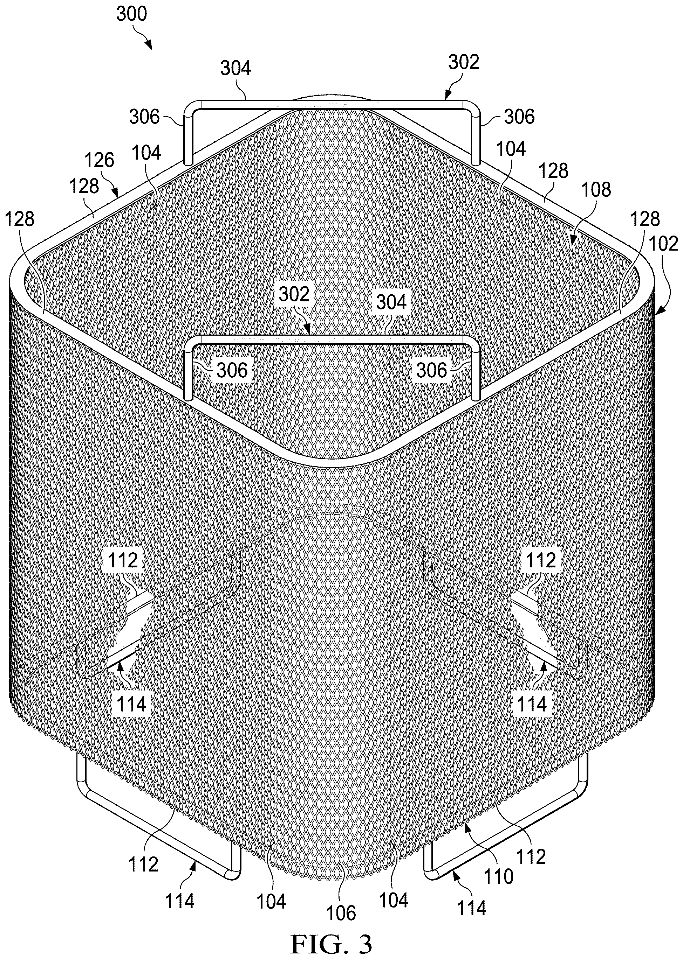

Referring now to Figure 3 is a perspective view of another embodiment of a filter insert **300** for a pellet handling system according to aspects of the present disclosure. The insert **300** is substantially similar or identical to the insert **100** with exceptions noted. It may also be used in the same or a similar way within the system **200** as the insert **100.** Here, handles **302** comprise grips **304** suspended above and attached to the upper frame **126** via legs **306.** The legs 306 are spaced apart but each is affixed to a separate frame rail **128.** Thus the grips **304** are somewhat suspended over the interior volume **108** of the insert **300.** The grips **304** are considered offset by about 45 degrees from the rails **128.** The handles **302,** in the configuration shown, allow for different options for pouring and manipulating the insert **300** but otherwise fulfill the function of the handles **120** discussed above (e.g., movement and manipulation of the insert **300** in or out of the associated bucket **200**).

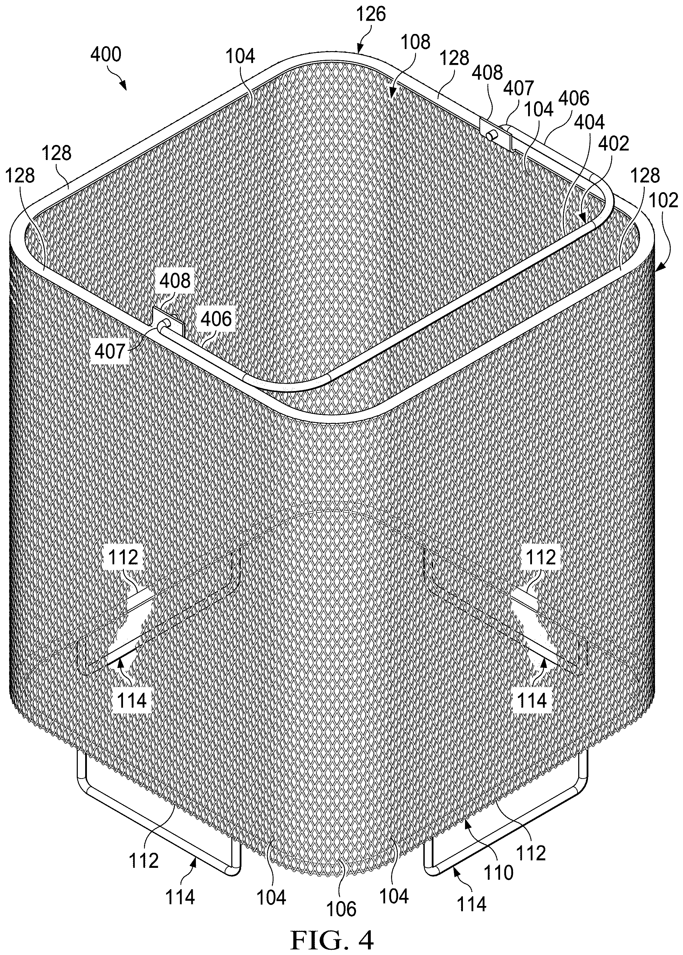

Referring now to Figure 4, a perspective view of another embodiment of a filter insert **400** for a pellet handling system according to aspects of the present disclosure is shown. The insert **400** is substantially similar or identical to the insert **100** with exceptions noted. It may also be used in the same or a similar way within the system **200** as the insert **100.** The insert **400** comprises a handle **402** with a grip **404** attached via spaced apart arms **406** into tabs **408** at inward bends **407.** The tabs **408** may be affixed to a pair of opposite wall panels **104** of the wall **102** and/or to top frame **406** on opposite rails **128.** The handle **402** operates similarly to a bucket handle and may lay down on or over the wall **102** of the insert **400** when not in use. The handle **402** may be used to lift or move the insert **400** and/or to aid in emptying or pouring out contents (fuel pellets) from the insert **400.** In use, a user may grip a lower portion of the insert **400** to empty or pour its contents (e.g., gripping at the offset **114** and the handle **402**).

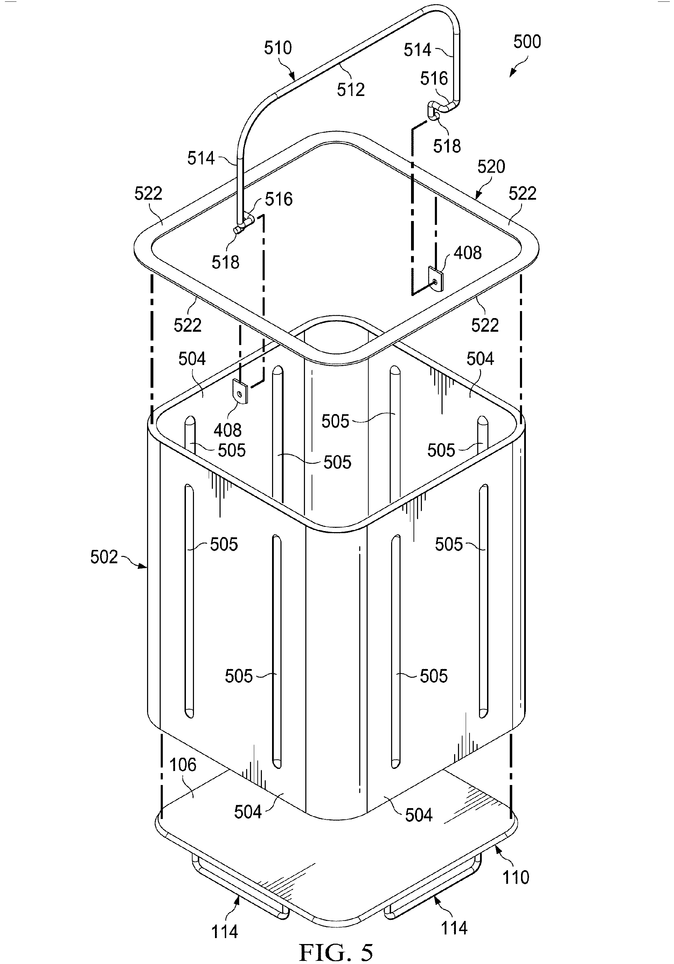

Referring now to Figure 5 an exploded perspective view of another embodiment of a filter insert **500** for a pellet handling system according to aspects of the present disclosure is shown. The insert **400** is substantially similar or identical to the insert **100** with exceptions noted. It may also be used in the same or a similar way within the system **200** as the insert **100.**

A wall **502** of the insert **500** may comprise four wall panels **504.** These may be integral components or may be formed separately and joined together. The wall panels **504** may be planar or substantially planar and may be joined to one another with a radius eliminating a sharp corner and conforming, for example, to radiused corners of lower frame **110** and/or floor **106.** Like the wall **102,** the wall **502** may comprise a wire screen or mesh material. It may also comprise a solid sheet of material that has been perforated such that dust and impurities may pass through while pelletized fuel is retained. The panels **504** may also comprise bends, folds, impressions, or other features to enhance stiffness or rigidity. Here, embossments **505** run vertically along the panels **504.** Two spaced apart vertical embossments **505** are provided on each panel **504** in the illustrated embodiments, but other configurations may be employed. The embossments **505** are not configured to substantially alter the interior volume of the insert **500,** nor to alter the ability of the panels **504** to retain fuel pellets but pass dust and impurities.

The insert **500** comprises an upper lip **520** in place of upper frame **126** (Figure 1). The upper lip **520** may comprise four rails **522** joined or formed into a square configuration or other configuration as may fit the top of the wall **502** (corners may be radiused, as with other components). Tabs **408** may be affixed to the lip **520** on a pair of opposite rails **522** and provide a mounting location for a handle **510.** Handle **510** may comprise a grip **510** having spaced apart arms **514** extending therefrom toward the tabs **408.** Insets **516** may extend inwardly from the arms (e.g., toward a center line of the handle **510** or insert **500**) and locate hooks **518** for insertion into tabs **408.** The insets **516** allow the handle **510** to lie flat on the lip **520** while no part of the handle **510** extends laterally beyond the lip **520** and/or wall **520.**

The wall **502,** floor **106** with frame **110,** and lip **520** may be joined together with adhesives, welds, or other means as known in the art, in a similar or identical manner to the components of the inserts **100, 300, 400** discussed above.

In one embodiment, a filter insert is sized to fit into a fuel pellet handling bucket and has a filter floor elevated by a plurality of standoffs to define a space below the screen mesh fuel insert.

It is to be understood that the terms "including", "comprising", "consisting" and grammatical variants thereof do not preclude the addition of one or more components, features, steps, or integers or groups thereof and that the terms are to be construed as specifying components, features, steps or integers.

If the specification or claims refer to "an additional" element, that does not preclude there being more than one of the additional element.

It is to be understood that where the claims or specification refer to "a" or "an" element, such reference is not be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

The term "at least" followed by a number is used herein to denote the start of a range beginning with that number (which may be a ranger having an upper limit or no upper limit, depending on the variable being defined). For example, "at least 1" means 1 or more than 1. The term "at most" followed by a number is used herein to denote the end of a range ending with that number (which may be a range having 1 or 0 as its lower limit, or a range having no lower limit, depending upon the variable being defined). For example, "at most 4" means 4 or less than 4, and "at most 40%" means 40% or less than 40%.

When, in this document, a range is given as "(a first number) to (a second number)" or "(a first number) - (a second number)", this means a range whose lower limit is the first number and whose upper limit is the second number. For example, 25 to 100 should be interpreted to mean a range whose lower limit is 25 and whose upper limit is 100. Additionally, it should be noted that where a range is given, every possible subrange or interval within that range is also specifically intended unless the context indicates to the contrary. For example, if the specification indicates a range of 25 to 100 such range is also intended to include subranges such as 26 -100, 27-100, etc., 25-99, 25-98, etc., as well as any other possible combination of lower and upper values within the stated range, e.g., 33-47, 60-97, 41-45, 28-96, etc. Note that integer range values have been used in this paragraph for purposes of illustration only and decimal and fractional values (e.g., 46.7 - 91.3) should also be understood to be intended as possible subrange endpoints unless specifically excluded.

It should be noted that where reference is made herein to a method comprising two or more defined steps, the defined steps can be carried out in any order or simultaneously (except where context excludes that possibility), and the method can also include one or more other steps which are carried out before any of the defined steps, between two of the defined steps, or after all of the defined steps (except where context excludes that possibility).

Further, it should be noted that terms of approximation (e.g., "about", "substantially", "approximately", etc.) are to be interpreted according to their ordinary and customary meanings as used in the associated art unless indicated otherwise herein. Absent a specific definition within this disclosure, and absent ordinary and customary usage in the associated art, such terms should be interpreted to be plus or minus 10% of the base value.

Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made therein by those of ordinary skill in the art, without departing from the inventive concept the scope of which is to be determined by the following claims.

## Claims

1. A fuel pellet handling system comprising:
a filter insert sized to fit into a fuel pellet handling bucket;
wherein the filter insert comprises a filter floor elevated by a plurality of standoffs to define a space below the screen mesh fuel insert; and
wherein the filter floor defines openings allowing dust to pass therethrough but retaining fuel pellets.

2. The fuel pellet handling system of claim 1 or 2, wherein the filter floor comprises a screen mesh.

3. The fuel pellet handling mechanism of claim 2, wherein the filter insert further comprises an upright wall extending from the filter floor.

4. The fuel pellet handling mechanism of claim 3, wherein the upright wall comprises a screen mesh.

5. The fuel pellet handling mechanism of claim 3 or 4, wherein the upright wall comprises four screen mesh panels arranged in a rectilinear configuration extending upwardly from the filter floor.

6. The fuel pellet handling system of any one of claims 3 to 5, wherein the filter insert further comprises a pair of handles joined to the upright wall.

7. The pellet handling system of claim 6, wherein each of the pair of handles is joined to a different one of the four screen mesh panels.

8. The pellet handling system of any preceding claim, further comprising a lower frame at a perimeter of the floor and joined to the plurality of standoffs.

9. The pellet handling system of any preceding claim, further comprising an upper frame at an upper perimeter of the four upright planar screen mesh walls and joining the pair of handles to the upright wall.

10. A fuel pellet handling system comprising:
a screen mesh floor;
four upright screen wall panels arranged in a slab-sided configuration and joined to the floor to define an interior volume for storing fuel pellets; and
a plurality of standoffs elevated the screen mesh floor to define a space below the screen mesh floor;
wherein the screen mesh floor and the screen wall panels retain fuel pellets in the interior volume while allowing particles below a predetermined size to pass through.

11. The pellet handling system of claim 10, further comprising a lower frame having a frame rail at a junction of each of the four upright screen wall panels and the screen mesh floor.

12. The pellet handling system of claim 10 or 11, wherein the plurality of standoffs are affixed to the lower frame.

13. The pellet handling system of any one of claims 10 to 12, further comprising an upper frame joined to the four upright screen walls panels at an opposite end thereof from the screen mesh floor, the upper frame providing a plurality of handles extending upwardly therefrom, preferably
wherein the upper frame comprises four frame rails, with one of each of the frame rail joined to one of the four upright screen walls, preferably at least one of:
wherein each of the plurality of handles joins to a single frame rail of the upper frame; and
wherein each of the plurality of handles joins to two of the frame rails of the upper frame.

14. A fuel pellet handling system comprising:
a fuel pellet bucket having an interior volume of a first contour, an open top, and a floor; and
a screen mesh insert sized to fit within the interior volume and having a second contour corresponding to the first contour;
wherein the mesh screen insert has a mesh screen floor elevated above the pellet bucket floor by at least one standoff such that a void is defined between the mesh screen floor and the bucket floor.

15. The fuel pellet handling system of claim 14, wherein the mesh screen insert has at least one handle affixed on a top thereof, preferably at least one of:
wherein the handle of the mesh screen insert is rotatable between an extended position and a lowered position;
further comprising a lid fitting onto the fuel pellet bucket; and
wherein the at least one handle spans an opening into the mesh screen insert.
